# EUROPEAN PATENT APPLICATION

(11) **EP 1 847 202 A1**
(43) Date of publication of application: **24.10.2007**
(21) Application number: 06708849.2
(22) Date of filing: 25.01.2006
(51) Int. Cl.: A47J 27/00, A47J 37/01

(54) **INSTRUCTIONAL COOKING CONTAINER**

(30) Priority: 25.01.2005 ES 200500160 U
(71) Applicant: Jorge Garcia, Norberto, 28002 Madrid (ES)
(72) Inventor: Jorge Garcia, Norberto, 28002 Madrid (ES)
(74) Representative: Carpintero Lopez, Francisco
(86) International application number: PCT/ES2006/000030
(87) International publication number: WO 2006/079676

(57) **Abstract**

A didactic cooking vessel which acts as an aid to a user who is unskilled in the preparation of a dish or recipe, and preferably intended for the preparation of "paella", which basically features a circular shape and is formed by a base (2) and a perimeter wall (3) which delimit an internal surface intended to receive the ingredients where the vessel forms a brim (4) around the perimeter of said perimeter wall (3), whereon graphic characters (5) are applied; said characters are indications, as in a recipe, on how a particular dish should be prepared, and which also features a separation mark (8-11) which delimits an area proportional to the necessary quantity of one of the ingredients which make up the dish.

## Description

### OBJECT OF THE INVENTION

This invention relates to a cooking vessel, equipped with means that aid a user unskilled in the preparation of a dish or recipe, in such a way that the vessel itself features a didactic functionality regarding the preparation of a particular dish.

The vessel which is the object of this invention is intended preferably for the preparation of "paella", although the same inventive concept may be used in the manufacture of vessels intended specifically for the preparation of other dishes.

### BACKGROUND OF THE INVENTION

Certain traditional dishes form a part of our culinary culture; "paella" is an example of these. However, knowledge with regard to its preparation is being lost, partly because of the lack of time or of interest among the younger generation regarding cooking, and partly because of ignorance of the preparation of certain dishes.

On the other hand, some people who are interested in cooking wish to prepare certain dishes, but they are either not skilled in cooking or are completely ignorant regarding the preparation of a certain dish. In this respect, cookery books act as a guide when preparing a dish.

No cooking vessels featuring means for guiding users in the preparation of a dish are known in the state of the art.

### DESCRIPTION OF THE INVENTION

The basis of this invention is to incorporate certain technical improvements to a cooking vessel, in order that the vessel itself may aid the user in the preparation of a dish.

More specifically, the invention relates to a cooking vessel featuring one or more marks which delimit a particular area and/or volume with regard to the internal surface of the same, in such a way that the size of said area or volume is proportional to the quantity to be used of one of the ingredients necessary for the preparation of a dish. In this way, a user who wishes to prepare a certain dish but who does not know the ideal proportions of the ingredients to be used, only needs to add the necessary quantity of an ingredient to cover the area delimited by said mark. That is to say that the mark, suitably positioned in the interior of the vessel acts as a measuring device for the quantity of an ingredient to be used.

The cooking vessel shall preferably feature a mark for each of the main ingredients of the recipe. Obviously, the size of the areas delimited by each of the marks is in accordance with the total size of the vessel, whether it be for two persons, three or four persons, etc.

Each of these marks features some type of indication in order to identify which ingredient it corresponds to; for example, this could be the engraved name of the ingredient, or the mark itself could be shaped like the ingredient to which it corresponds, for example, the silhouette of a tomato for the content of tomato, an olive for the content of oil, etc.

The cooking vessel which is the object of this invention shall preferably feature a series of graphic characters printed, stamped, engraved or applied by means of any other technique; these characters forming a text indicating how to prepare a particular recipe.

The vessel, as it provides a didactic functionality which is additional to its function as a vessel, has a remarkable appeal which arouses in its users interest in cooking and particularly in the preparation of a particular dish.

### DESCRIPTION OF THE DRAWINGS

To complement the description being carried out and with the aim of aiding a better understanding of the characteristics of the invention, in accordance with a preferred practical embodiment of the same, a set of drawings is attached as an integral part of said description, wherein the following has been portrayed for illustrative and not limitative purposes:
- Figure 1: portrays a perspective view of a preferred embodiment of the vessel which is the object of this invention;
- Figure 2: portrays a perspective view of another embodiment of the invention;
- Figure 3: portrays a front elevational view in diametrical cross-section of the vessel in Figure 1;
- Figure 4: portrays a perspective view of another embodiment of the invention.

### PREFERRED EMBODIMENT OF THE INVENTION

On viewing the aforementioned figures, it may be seen that in one of the preferred embodiments of the invention, the didactic cooking vessel (1) which is the object of this invention is of a circular shape and is comprised of a base (2) and a perimeter wall (3) which determine an interior surface intended to receive the ingredients of a particular dish to be cooked, during the preparation of the same.

In this preferred embodiment, the vessel forms a brim (4) around the perimeter of said perimeter wall (3), whereon graphic characters (5) have been applied by means of any known technique, whether by engraving, printing, stamping, etc. These graphic characters (5) constitute indications, in the form of a recipe, as to how a particular dish should be prepared, explaining the sequence of steps to be followed, the ingredients, cooking times, etc.

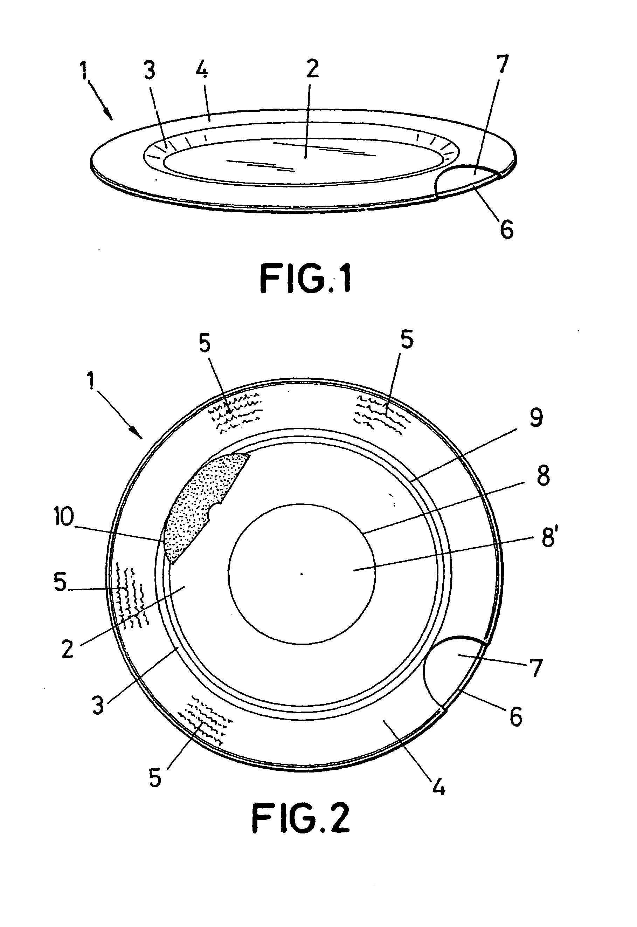

On the underside of the brim (4), a reinforcing ring (6) is arranged, as may be seen in Figure 2 especially, in such a way that the edge of the brim (4) is folded over said ring (6) so that the two elements are fixed together. The brim (4) also features at least one cut-out (7) which leaves the ring (6) accessible, thus forming a manual handle.

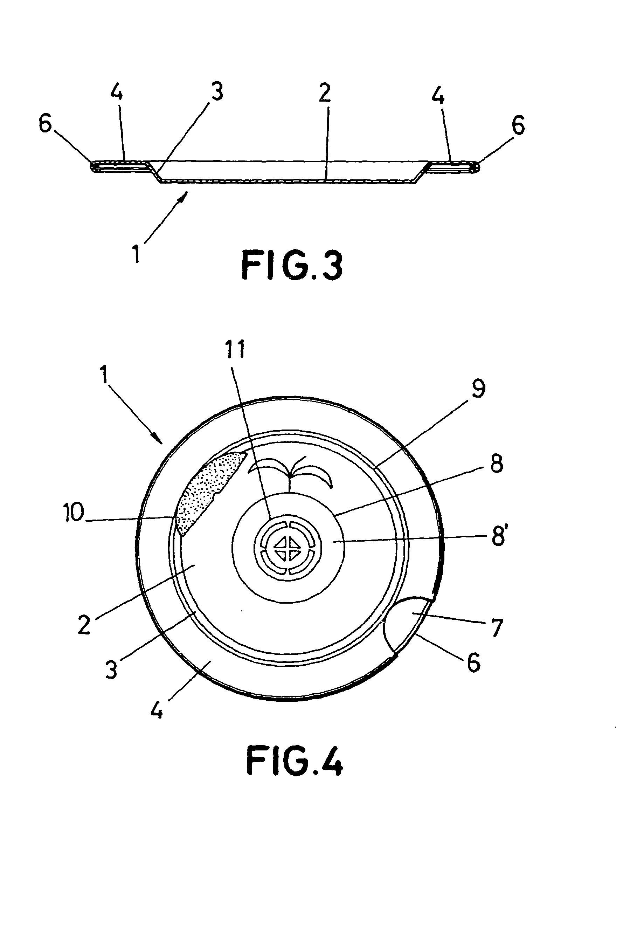

As may be seen in Figures 3 and 4, the vessel features on said internal surface, whether on the internal side of the base (2), of the perimeter wall (3) or of both, at least one separating mark (8), (9), (10), (11) which delimits an area of said internal surface, in such a way that the size of said area is proportional to the necessary quantity of one of the ingredients necessary for the preparation of a dish.

Said separation mark (8-11) may consist, for example, of: a printed line, a line in bas-relief or in relief on the material of the vessel, or any other type of mark which permits the delimitation of a particular area of the internal surface of the vessel. Preferably, this line which constitutes the separation mark (8-11) is a closed line which delimits in its interior an area of the internal surface of the vessel (1).

In the embodiment in Figure 3, the vessel (1) features a first mark (8) consisting of a circumferential line, concentric with the centre of the base (2), which delimits a first circular area (8'). It also features a second mark (9) which also consists of a concentric circumferential line, this one being arranged on the perimeter wall (3), in such a way that the first area (8') is included in the volume delimited by the second mark (9) in the interior of the vessel (1).

In this embodiment, the vessel also features a third mark (10) on part of the base (2) and part of the perimeter wall (3). A fourth mark (11) is also concentric and is included within the mark (8).

The surface area or volume of each of these marks (8-11) is proportional to the quantity of one of the ingredients which make up a dish, for example a "paella", obviously in accordance with the total size of the vessel. In this way, the second mark (10) marks the necessary volume of oil for the preparation of the "paella". The first mark (8) delimits an area (8') which identifies the area to be covered by the sauté when preparing the "paella". The fourth mark (11) indicates the quantity of chopped tomato to be used. The second mark (9) indicates the quantity of water necessary for boiling the rice. For the remaining ingredients, additional marks may be used, alternatively the quantities of the same may be indicated by means of the graphic characters (5), which also have the function of indicating to the user the order of the steps and the time for each.

In other preferred embodiments, the vessel may be adapted for the preparation of lentils, a stew, prawns in garlic, etc.

In view of this description and the set of drawings, a person skilled in the art will be able to understand that the embodiments of the invention described herein may be combined in many ways within the object of the invention. The invention has been disclosed in accordance with some preferred embodiments of the same, but for a person skilled in the art it will be evident that many variations may be introduced into said preferred embodiments without exceeding the object of the invention claimed.

## Claims

1. A didactic cooking vessel, consisting of a base and a perimeter wall which delimit an internal surface intended to receive the ingredients necessary for the preparation of a particular dish, **characterised in that** said internal surface features at least one separation mark which delimits an area or volume within said vessel, the size of said area or volume being proportional to the necessary quantity of one of said ingredients.

2. - A didactic cooking vessel, according to claim 1, **characterised in that** the separation mark consists of a printed line, or a line in bas-relief or in relief on the material of the vessel.

3. - A didactic cooking vessel, according to any of the preceding claims, **characterised in that** the separation mark is defined by a closed line.

4. - A didactic cooking vessel, according to any of the preceding claims, **characterised in that** it features two separation marks formed by respective circumferential lines which are concentric with the centre of said base.

5. - A didactic cooking vessel, according to any of the preceding claims, **characterised in that** it features a separation mark formed by a closed line on the internal surface corresponding to said perimeter wall.

6. - A didactic cooking vessel, according to any of the preceding claims, **characterised in that** it features a brim around the perimeter of said perimeter wall.

7. - A didactic cooking vessel, according to claim 6, **characterised in that** the brim features graphic characters.

8. - A didactic cooking vessel, according to claims 6 or 7, **characterised in that** the brim features one or more cut-outs which define a manual handle.

9. - A didactic cooking vessel, according to any of claims 6 to 8, **characterised in that** it features a reinforcing ring fixed to the brim of the vessel.

10. - A didactic cooking vessel, according to claim 9, **characterised in that** part of the brim is folded over said ring.
